**Europäisches Patentamt**

**European Patent Office**

**Office européen des brevets**

(11) Publication number: **0 018 807**

**A1**

(12) **EUROPEAN PATENT APPLICATION**

(21) Application number: **80301377.0**

(22) Date of filing: **28.04.80**

(51) Int. Cl.³: **A 01 M 21/04**

(30) Priority: **08.05.79 GB 7915909**
**22.11.79 GB 7940356**

(43) Date of publication of application:
**12.11.80 Bulletin 80/23**

(84) Designated Contracting States:
**AT BE CH DE FR IT LI LU NL SE**

(71) Applicant: **Lohoar, Grant**
**Wiston Cottage Nayland**
**Colchester Essex(GB)**

(72) Inventor: **Lohoar, Grant**
**Wiston Cottage Nayland**
**Colchester Essex(GB)**

(74) Representative: **Nash, Keith W.**
**KEITH W. NASH & Co. 22 Hills Road**
**Cambridge CB2 1JP(GB)**

(54) Apparatus for the chemical treatment of crops.

㊗ Apparatus for treatment of crops, especially weeds growing to a greater height than that of the crop, comprising a rotating application roller (15) which is maintained at a predetermined level above the ground, and a liquid chemical coating means which includes at least one roller (16 or 31) in rolling contact with the application roller and acting in use continuously to coat the application roller with chemical liquid which is gelled by means of a thickening agent.

Fig. 1.

BAD ORIGINAL

-1-

## Apparatus for the Chemical Treatment
## of Crops

This invention relates to apparatus for the chemical treatment of crops and the like, especially the application of a chemical weedkiller to weeds growing amongst a crop.

Background

For the chemical treatment of growing crops with feeds and pesticides, tractor borne spraying units are commonly employed. However, treatment for weeds can usually only be carried out before the crop starts to grow, because any subsequently sprayed-on weedkiller is liable to cause crop damage. Up to the present, therefore, weeds which germinate simultaneously with or subsequent to germination of the crop have generally been left untreated, although their presence is materially disadvantageous both during crop growth and maturity and during harvesting. It is an aim of the present invention to contribute to the solution of this problem.

## The Invention

According to the invention, there is provided apparatus for the chemical treatment of crops and the like, comprising an application roller, means for maintaining the application roller at a predetermined level above the ground, means for driving the application roller in rotation, and means for coating said application roller with a liquid chemical having a thickening agent added thereto substantially to prevent dripping.

Generally, weeds tend to grow higher than the crop especially during the initial stages of growth. Thus, if the level of the application roller is preset higher than the tops of the crop but below the tops of the intermingled weeds, a weedkiller can be successfully applied without crop damage, provided also that dripping of the weedkiller can also be substantially avoided. In the present invention, dripping of weedkiller is minimised by adding a thickening agent, such as an anti-drift agent already known for use in chemical spraying.

## Further features

The coating means may comprise a chemical both in conjunction with an extracting roller rotating through the liquid surface and one or more transfer rollers rolling between said extracting roller and the application roller. Preferably, however, the coating means comprises at least one distribution roller in rolling contact with the application roller, said at least one distribution roller being made hollow in order to serve as a reservoir for the thickened liquid chemical. In a preferred construction, said at least one distribution roller has an apertured reservoir surface covered with a layer of porous material, such as a layer of felt or the like in turn covered by a perforated outer layer of non-porous material. Conveniently, said at least one distribution roller has a filler plug, and means are provided to bring said distribution roller to rest after rotation thereof with the filler plug uppermost.

The driving means may act on the distribution roller or rollers, but in the preferred arrangement the driving means acts directly on the application roller, the at least one distribution roller being rotated by rolling contact with said driven application roller.

The roller assembly may be mounted on an arm also supporting the drive means, for example an arm adapted for lateral attachment to a hedge trimming vehicle or verger. However, in the preferred practical arrangement referred to, the level maintaining means comprises

-4-

a boom adapted to be mounted on the front or rear of a tractor, more especially a boom which is adapted to be pivotally mounted on the tractor. For example, at least one wheel may be mounted on the boom to follow the contour of the ground and to pivot the boom accordingly. Said at least one wheel is preferably adjustable relative to the boom in order to enable said predetermined level of the application roller to be adjusted, for example by means of a ram powered from the tractor hydraulics system.

The rotational drive means for the roller assembly may conveniently comprise an electric motor, such as a variable speed D.C. series motor adapted to be connected to the tractor battery supply circuit.

In the accompanying drawings:-

Figure 1 is a diagrammatic perspective view of a preferred arrangement of crop treating apparatus in accordance with the invention, mounted at the front end of a tractor;

Figure 2 is a cross-section on the line A-A of Figure 1;

Figure 3 is a cross-section on the line B-B of Figure 2;

Figure 4 is a cross-section on the line C-C of

Figure 3;

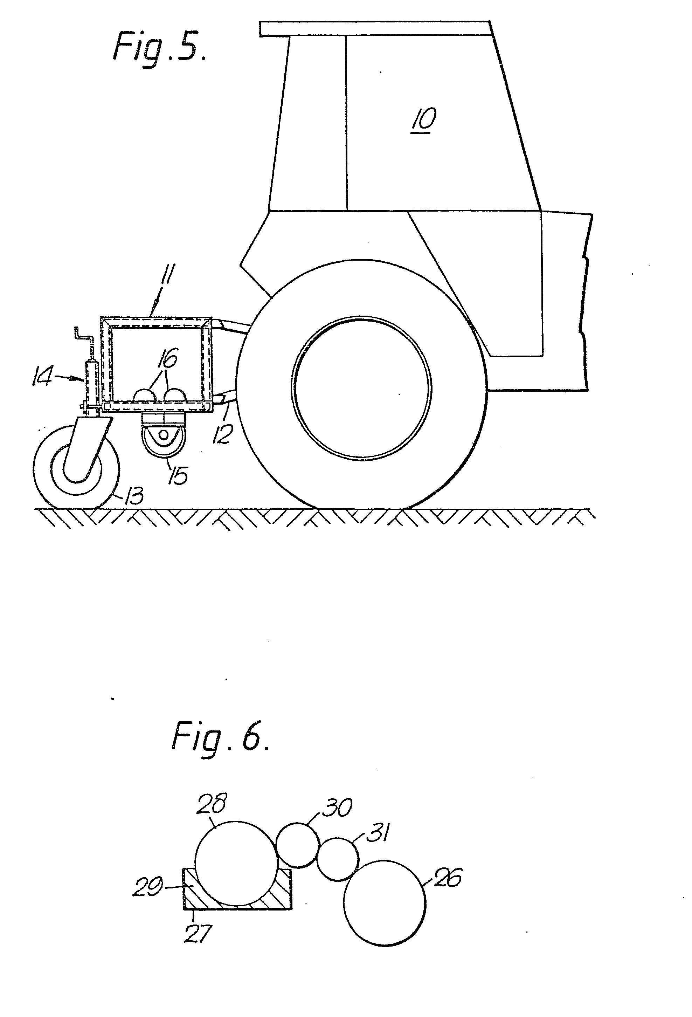

Figure 5 is a diagrammatic side view of the preferred arrangement mounted on the tractor; and

Figure 6 shows an alternative roller assembly.

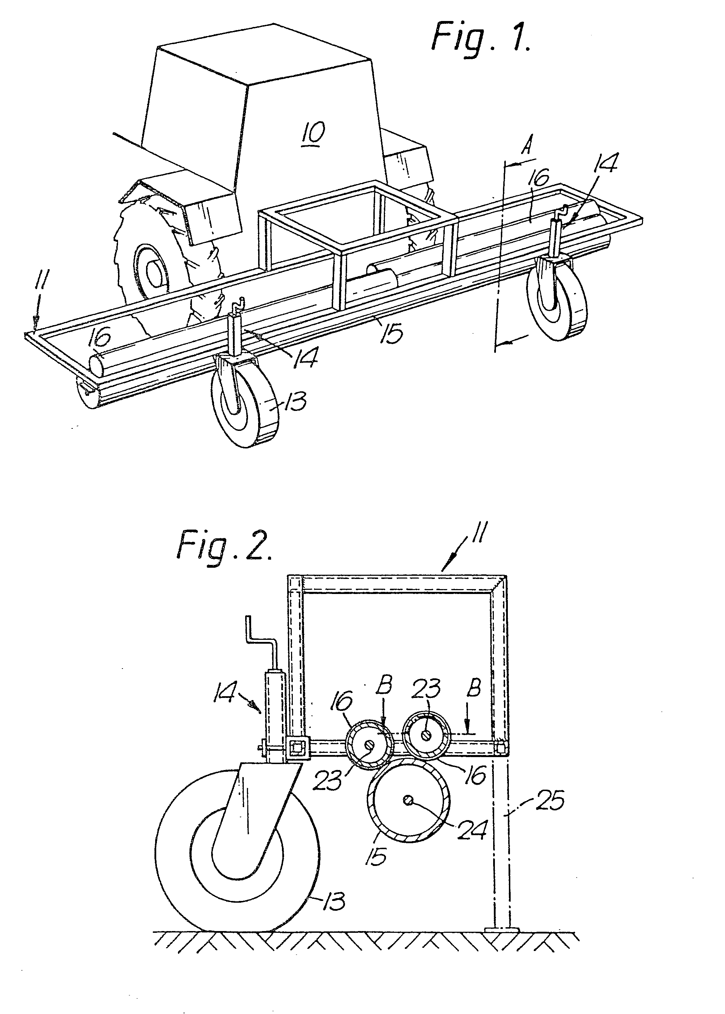

In Figure 1, the reference 10 designates a tractor and the reference 11 designates a boom or transverse framework supporting the crop treating apparatus in accordance with the invention. The rear of the boom 11 is mounted on the front arms 12 of the tractor 10 (see Figure 5), this mounting including a pivotal connection (not shown) enabling the boom to pivot on its mounting about a horizontal axis. The front of the boom 11 carries a pair of ground wheels 13. In use, the wheels 13 follow the contour of the ground, and the mounting of the boom 11 enables it to pivot accordingly. The mean level at which the boom is supported above the ground is adjustable by varying the level of the wheels 13 relative to the front of the boom framework. A manual adjustment for this purpose is indicated at 14; alternatively this adjustment may be made by means of an hydraulic ram powered from the tractor hydraulics.

A transversely extending roller assembly is carried by the boom 11, generally on the underside thereof. This assembly comprises an application roller 15 and two distributing rollers 16 (see Figures 1, 3 and 5). The roller assembly is employed, for example, to apply weedkiller to weeds growing amongst a crop and projecting above the level of the top of the crop. Thus, by means which will be later described, the application roller 15, i.e. the lowermost roller, is rotated while being continuously coated with a liquid chemical weedkiller. The height of the front end of the boom is set such that this rotating application roller 15 lies at a predetermined level above the ground which is above the height of the top of the crop but below the height of the tops of the weeds. When the tractor 10 is driven through the crop, the weedkiller coating on the roller 15 is brushed on to the weeds, but the crop is untouched. The ground wheels 13 ensure that the said predetermined level of the roller 15 substantially follows the ground contour.

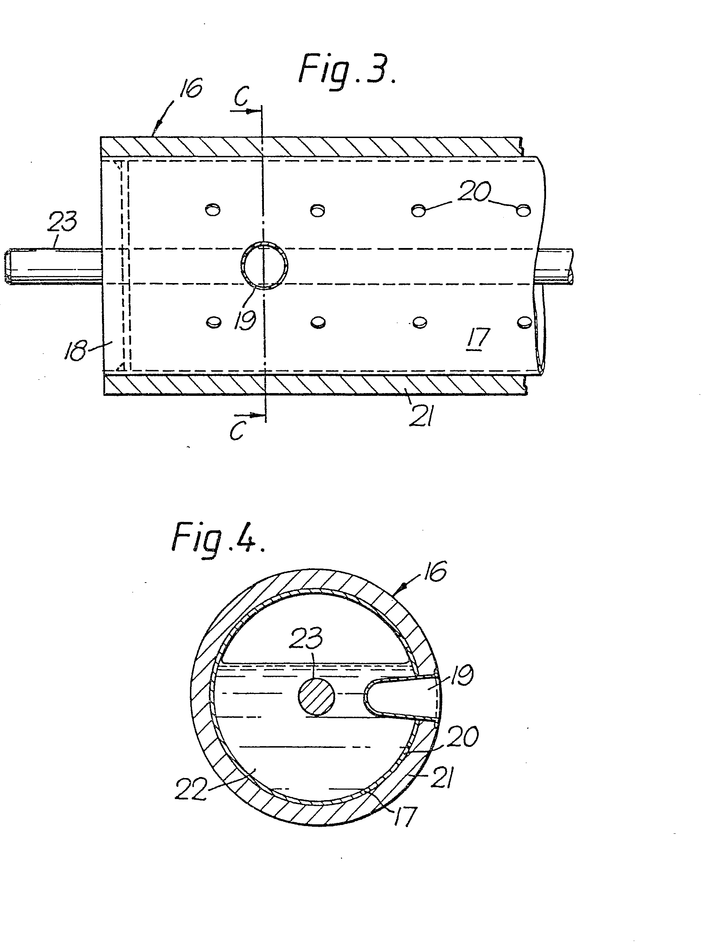

The construction of a distribution roller 16 is shown in detail in Figures 3 and 4. It comprises a hollow plastics pipe 17, for example of polyvinylchloride, closed at its ends 18. It is provided with a countersunk filler plug 19, and two rows of holes 20 extending along its length, adjacent opposite sides of the filler plug in the circumferential direction. In a typical case, the pipe 17 may be of about 12.5 cm diameter, with the holes 20 spaced apart about 5 cm in the longitudinal direction. From Figure 1 it will be clear that each distribution roller 16 spans a half the length of the application roller 15, but it would be possible to employ a single full length distribution roller, or alternatively more than two such rollers.

The apertured pipe 17 is covered with a layer 21 of felt or similar porous material. Furthermore, as each distribution roller 16 is in rolling contact with the application roller 15 and in use is rotationally driven thereby, it may be preferred to cover the felt or like layer 21 with a thin perforated outer layer (not shown) of rubber or plastics material.

The distribution rollers 16 serve as reservoirs for a liquid weedkiller 22 which, in use, is coated on the application roller 15.

The application roller 15 is a hollow roller of plastics material such as polyvinylchloride or a metal roller, closed at its ends.

The rollers 15 and 16 are shaft mounted on the boom framework 11 for rotation about their respective

-8-

axes. The support shafts for the distribution rollers 16 are designated 23 in the drawings, and the support shaft for the application roller 15 is designated 24. The latter may take the form of stub shafts at opposite ends of the application roller 15 if desired.

Mounted at one end of the boom 11 is an electric motor (not shown) for applying a rotational drive to the application roller 15. Conveniently, this motor may take the form of a speed controllable d.c. series motor having a variable resistance in its supply lead. This supply lead is conveniently adapted for connection into the battery circuit of the tractor 10.

Relatively little power is required to drive the rollers 15, 16, so that a small electric motor will usually suffice. However, if a heavy drive unit is employed, for example an hydraulic motor powered from the tractor hydraulics, it will be preferable to mount a counterweight at the remote end of the boom.

In use, the distribution rollers 16 are loaded with liquid chemical weedkiller, thickened with a thickening agent for the reason later discussed, and the boom 11 is attached to the tractor 10. The mean level of the application roller 15 is set to the

0018807

-9-

required predetermined level, the rotational roller assembly drive is started into operation, and the tractor 10 is driven through the crop to be treated. As the distribution rollers 16 rotate, driven by the rotating application roller 15, weedkiller is fed into the felt layers 21 and is continuously coated on to the application roller 15, one distribution roller coating each half of the length of the application roller. The latter roller 15 brushes the weedkiller on to the weeds, and more weedkiller is drawn out of the reservoir, through the porous layers 21 of the distribution rollers 16, to maintain the coating on the application roller 15 as crop treatment proceeds.

Conveniently, when the treatment is completed and the roller assembly drive is stopped, means may be provided to ensure that the distribution rollers 16 come to rest with the filler plug 19 and the rows of holes 20 uppermost. In Figure 2, the reference 25 denotes a support for maintaining the generally horizontal condition of the boom 11 when it is disconnected from the tractor.

It will be clear from the above description of the arrangement of the roller assembly and its method of use that a primary aim of the invention is to be

-10-

able to brush a liquid chemical on to plants at a higher level without contaminating other plants at a lower level. It is therefore clearly important to avoid dripping of the liquid chemical in question. The above-described arrangement is specifically designed to minimise leakage, for example by the use of sealed bearings at the ends of the distribution rollers through which their support shafts extend. In addition, however, it is necessary to minimise dripping due to surpluses of liquid chemical collecting on the surfaces of the rollers 15 and 16. For this reason, as previously mentioned, a thickening agent is added to the liquid chemical, to convert said liquid into a gel. One thickening agent which can be employed is the material known by the Trade Mark Polycell, but this is not wholly satisfactory as the gel tends to solidify if not used relatively quickly. More suitable agents are the anti-drift agents commonly employed as additives to chemicals used for crop spraying. One such suitable agent is that known by the Trade Mark Naflock.

Finally, it will be appreciated that various further modifications of the above-described invention, other than those already mentioned, are possible within

-11-

the scope of the invention. For example, Figure 6
diagrammatically illustrates an alternative arrangement
for coating the application roller, which in this
figure is designated 26. A static reservoir tank 27
is fixedly mounted on the boom (not shown), with an
extraction roller 28 rotating through the gelled
liquid 29 in the tank. Transfer rollers 30 and 31
form a chain between the extraction roller 28 and the
application roller 26. Clearly, the rollers 28, 30
and 31 will have suitable porous outer layers
facilitating the transfer of the liquid chemical which,
as previously, is applied as a coating to the
application roller 26. The modified arrangement of
Figure 6 avoids the relatively complex construction of
the distribution rollers 16 of the arrangement of
Figures 1 to 5, but is disadvantageously heavy and
possibly more expensive. More important, it entails
a larger number of liquid covered surfaces from which
the chemical can drip or be wasted through evaporation.

-12-

## Claims

1.   Apparatus for the chemical treatment of crops and the like, comprising an application roller, means for maintaining the application roller at a predetermined level above the ground, means for driving the application roller in rotation, and means for coating said application roller with a liquid chemical having a thickening agent added thereto substantially to prevent dripping.

2.   Apparatus according to claim 1, wherein said coating means comprises at least one distribution rolle: in rolling contact with the application roller.

3.   Apparatus according to claim 2, wherein said at least one distribution roller is made hollow in order to serve as a reservoir for the thickened liquid chemical.

4.   Apparatus according to claim 3, wherein said at least one distribution roller has an apertured reservoir surface covered with a layer of porous material.

5.    Apparatus according to claim 4, wherein said at least one distribution roller is covered with a layer of felt or the like in turn covered by a perforated outer layer of non-porous material.

6.    Apparatus according to any of claims 3 to 5, wherein the at least one distribution roller has a filler plug, and means are provided to bring said distribution roller to rest after rotation thereof with the filler plug uppermost.

7.    Apparatus according to any of claims 1 to 6, in which the driving means acts directly to the application roller.

8.    Apparatus according to any of claims 1 to 7, wherein the level maintaining means comprises a boom adapted to be mounted on the front or rear of a tractor.

9.    Apparatus according to claim 8, wherein said boom is adapted to be pivotally mounted on the tractor.

10.    Apparatus according to claim 9, including at least one wheel mounted on the boom to follow the contour of the ground and to pivot the boom accordingly.

0018807

1/3

# Fig. 1.

# Fig.2.

## Fig.3.

## Fig.4.

Fig.5.

10

11

14

16

12

15

13

Fig.6.

28

30

31

29

27

26

0018807

## EUROPEAN SEARCH REPORT

Application number

EP 80 30 1377

| | DOCUMENTS CONSIDERED TO BE RELEVANT | | CLASSIFICATION OF THE APPLICATION (Int. Cl. [1]) |
|---|---|---|---|
| Category | Citation of document with indication, where appropriate, of relevant passages | Relevant to claim | |
| X | FR - A - 2 342 656 (RENE BAILLY) <br> * Whole document * | 1-8 | A 01 M 21/04 |
| | GB - A - 1 508 709 (SOCIETE D'ETUDES ET DE CONSTRUC- TIONS MECANI- QUES DE CORBEIL) <br> * Whole document * | 1-8 | |
| | FR - A - 2 342 657 (RENE BAILLY) <br> * Whole document * | 1-8 | TECHNICAL FIELDS SEARCHED (Int.Cl. [3]) <br><br> A 01 M |
| | DE - A - 1 782 190 (CLEANACRES LTD.) <br> * Page 5, line 14 to page 6, line 20 * | 8,9 | |
| | US - A - 2 575 521 (RALPH J. IRELAND) <br> * Claims * | 8-10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| THE HAGUE | 08-08-1980 | DE RUITER |

EPO Form 1503.1  06.78

X The present search report has been drawn up for all claims